# EUROPÄISCHE PATENTSCHRIFT

(11) **EP 2 002 132 B1**
(45) Veröffentlichungstag und Bekanntmachung des Hinweises auf die Patenterteilung: **23.12.2009**
(21) Anmeldenummer: 07722149.7
(22) Anmeldetag: 02.04.2007
(51) Int. Cl.: F16B 39/282, F16B 39/24

(54) **SELBSTSICHERNDES BEFESTIGUNGSELEMENT**
SELF-LOCKING FASTENING ELEMENT
ELEMENT DE FIXATION AUTOBLOQUANT

(30) Priorität: 05.04.2006 DE 202006005523 U
(43) Veröffentlichungstag der Anmeldung: 17.12.2008
(73) Patentinhaber: Acument GmbH & Co. OHG, 56567 Neuwied (DE)
(72) Erfinder: BONGRATZ, Robert, 41464 Neuss (DE); ESSER, Josef, 41462 Neuss (DE); KUPCZYK, Robert, 41748 Viersen (DE)
(74) Vertreter: Beck, Alexander
(86) Internationale Anmeldenummer: PCT/DE2007/000591
(87) Internationale Veröffentlichungsnummer: WO 2007/112732

(56) Entgegenhaltungen:
- DE-U1-202005 018 835
- US-A- 3 351 116
- US-A- 4 281 699
- US-A- 5 779 417

## Beschreibung

Die vorliegende Erfindung betrifft ein selbstsicherndes Befestigungselement, beispielsweise in Form einer Schraube oder Mutter, dessen mit einem Werkstück zusammenwirkende Stirnfläche eine Anzahl radial verlaufende Rippen aufweist. Solche selbstsichernde Befestigungselemente sind bereits seit langem bekannt, beispielsweise aus der DE 25 56 985 C2, die den diesbezüglichen Stand der Technik darstellt, und haben sich grundsätzlich als eine gute Lösung erwiesen. Im Laufe der Zeit haben sich in der Praxis aber folgende Probleme gezeigt, die mit der vorliegenden Erfindung behoben werden:
- die Selbstsicherungswirkung dieser Befestigungselemente ist nur dann sichergestellt, wenn eine Vorspannkraft existiert. Wenn diese Vorspannkraft beispielsweise durch Setzen der Verbindung verloren geht, verschwindet die Selbstsicherungswirkung und ein selbsttätiges Losdrehen der Verbindung kann nicht mehr ausgeschlossen werden;
- die Ausführung dieser Befestigungselemente bedarf einer technischen Verbesserung, wenn sie einsatzbedingt auf einem weichen Material festgezogen werden sollen, welches nicht "ausgewalzt" (= durch Kaltverformung verfestigt) werden kann. Insbesondere bei der Verbindung von Werkstücken aus Aluminium wird dann das Anzugsdrehmoment extrem hoch.

Gemäß dem Stand der Technik aus der US 5,779,417A werden die vorgenannten Probleme durch ein Befestigungselement gelöst, welches eine durch einen Flansch verbreiterte Stirnfläche aufweist, der sich sowohl radial nach außen als auch leicht schräg nach unten auf das Werkstück hin erstreckt. Dieser Flansch wirkt wie eine Blattfeder und stellt damit sicher, dass auch dann noch eine ausreichende Vorspannkraft gegeben ist, wenn sich die Verbindung gesetzt hat. Der Verlust der Vorspannkraft kann somit durch die Elastizität des nach außen und leicht schräg auf das Werkstück zu gerichteten Flansches zum größten Teil ausgeglichen werden.

Ausgehend von diesem Stand der Technik ist es daher Aufgabe der vorliegenden Erfindung, die Flächenpressung des Befestigungselementes auf das damit zusammenwirkende Werkstück bei hohen Vorspannkräften zu reduzieren.

Erfindungsgemäß wird diese Aufgabe dadurch gelöst, dass im äußeren Flanschbereich zusätzliche Rippen vorgesehen werden.

Die beste Wirkung erzielt man, wenn jeweils eine zusätzliche Rippe zwischen den über die ganze Stirnfläche verlaufenden Rippen angeordnet ist.

Durch diese größere Anzahl von Rippen im Außenbereich kann ein höheres Losdrehmoment und damit eine verbesserte Selbstsicherung erreicht werden.

In der Vergangenheit eingesetzte Setzsicherungen hatten eine ungenügende Federkraft. Für die Anwendung mit hochfesten Verbindungselementen sind sie nicht geeignet. Daher wurden die Normen dieser Setzsicherungen (z. B.: DIN 128, DIN 137, DIN 6904, DIN 6905, DIN 6907, DIN 6797, DIN 6798) vor ca. 2 Jahren zurückgezogen.

Die Setzkraft der hier beschriebenen Teile ist deutlich höher und kann Setzbeträge auch hochfester Verbindungselemente erheblich kompensieren.

Ein Nachteil der im Patent DE 25 56 985 C2 beschriebenen Sicherungsrippen sind hohe Montagemomente auf weichen Werkstoffen. Speziell Aluminium und AL-Legierungen haben in der heute praktizierten Leichtbauweise an Bedeutung gewonnen. Diese Auflagewerkstoffe lassen sich mit der bisher üblichen Rippengeometrie nicht rollieren. Infolge der hohen Vorspannkräfte ist die spezifische Flächenpressung zu hoch. Bei den kleiner gestalteten und in ihrer Anzahl erhöhten Sicherungsrippen wird deutlich mehr Rippenlänge als Traganteil gewonnen, wodurch die Flächenpressung an der Auflage reduziert wird. Ebenfalls wirkt sich die größere Anzahl von Rippen im äußeren Auflagebereich günstig auf das Montage- und Sicherungsverhalten aus.

Vorzugsweise ist es möglich, durch die Federwirkung eines zusätzlich gewölben Flansches eine zusätzliche Federkraft auf die Selbstsicherungsrippen aufzubringen.

Die oben genannten Probleme können auch gemäß dem Stand der Technik aus der DE 20 2005 018 835 U1 dadurch gelöst werden, dass anstelle einer Veränderung bei Schraube oder Mutter eine entsprechende Beilagscheibe für die Selbstsicherung von Befestigungselementen an einem Werkstück Verwendung findet, bei der zumindest eine Stirnfläche der Beilagscheibe mit radial verlaufenden Rippen versehen ist, wobei die Beilagscheibe schräg nach außen auf das Werkstück hin gewölbt ist.

Auch hier stellt sich bei dem vorliegenden Stand der Technik die Aufgabe, die Flächenpressung der Beilagscheibe auf das damit zusammenwirkende Werkstück bei hohen Vorspannkräften zu reduzieren und damit die Sicherungswirkung noch weiter zu verbessern.

Erfindungsgemäß wird diese Aufgabe auch hier dadurch gelöst, dass bei der Beilagscheibe im äußeren Flanschbereich zusätzliche Rippen vorgesehen werden.

Auch hier wird die beste Wirkung erzielt, wenn jeweils eine zusätzliche Rippe zwischen den über die ganze Stirnfläche verlaufenden Rippen angeordnet ist. Durch diese größere Anzahl von Rippen im Außenbereich kann auch hier ein höheres Losdrehmoment und damit eine bessere Selbstsicherung erreicht werden.

Des weiteren weisen die Sicherungsrippen gemäß DE 25 56 985 C2 den Nachteil auf, dass bei der Befestigung von Werkstücken aus weichen Materialien ein sehr hohes Anzugsdrehmoment erforderlich ist. Speziell Aluminium und Aluminiumlegierungen werden heute bei den geforderten Leichtbaukonstruktionen verbreitet verwendet. Diese Materialien können jedoch nicht optimal mittels der im Stand der Technik bekannten Geometrie der Rippen durch Kaltverformung verfestigt werden, wie dies bei Stahl der Fall ist. Aus diesem Grunde werden sehr hohe Anziehdrehmomente erforderlich und dadurch können die Befestigungselemente zu gering vorgespannt werden. Erfindungsgemäß wird durch den Flansch und die größere Anzahl der Rippen eine wesentlich größere Länge der Rippen zur Verfügung gestellt und dadurch die Berührungsfläche deutlich vergrößert. Darüber hinaus ist die Sicherungswirkung durch den größeren Durchmesser des Flansches aufgrund der Hebelwirkung vergrößert. Wichtigster Vorteil der neuen Lösung ist die federnde und damit Setzbeträge zwischen den verspannten Bauteilen ausgleichende Form des Verbindungselementes, vorzugsweise in Verbindung mit der Sicherungswirkung durch die neue Rippengeometrie.

Die spezielle Rippengeometrie und Rippenanordnung ermöglicht ein verbessertes Anziehverhalten auf Gegenlagen geringer Festigkeit.

Die konkave Auflage bewirkt eine verhältnismäßig große Auflagefläche während des Anziehvorganges bei noch geringer Vorspannkraft, die bei größer werdender Vorspannung weiterhin zunimmt. Ebenso bleibt bei größeren Setzbeträgen in der Verbindung eine große Auflagefläche bestehen. Dieser Effekt wird noch weiter verbessert, in dem die zusätzlichen Rippen im Außenbereich des Flansches zur Wirkung kommen. Durch die dergestalt vergrößerte Anzahl von Rippen wird die Selbstsicherungswirkung nochmals verbessert.

Die vorliegende Erfindung.soll im folgenden anhand der in der beigefügten Zeichnung dargestellten Ausführungsbeispiele näher erläutert werden. Es zeigt:
Figur 1 ein erfindungsgemäßes selbstsicherndes Befestigungselement in Form einer Schraube von der Seite, wobei der Flansch teilweise geschnitten dargestellt ist;
Figur 2 das Befestigungselement der Figur 1 von unten, das heißt vom Werkstück aus gesehen;
Figur 3 ein weiteres erfindungsgemäßes selbstsicherndes Befestigungselement in Form einer Schraube von der Seite, wobei der Kopf teilweise geschnitten dargestellt ist;
Figur 4 das Detail X der Figur 3;
Figur 5 eine erfindungsgemäße Beilagscheibe von der Seite, teilweise geschnitten;
Figur 6 die Beilagscheibe der Figur 5 von der Werkstückseite her gesehen; und
Figur 7 ein weiteres erfindungsgemäßes selbstsicherndes Befestigungselement in Form einer Mutter von der Seite, wobei die Mutter teilweise geschnitten dargestellt ist.

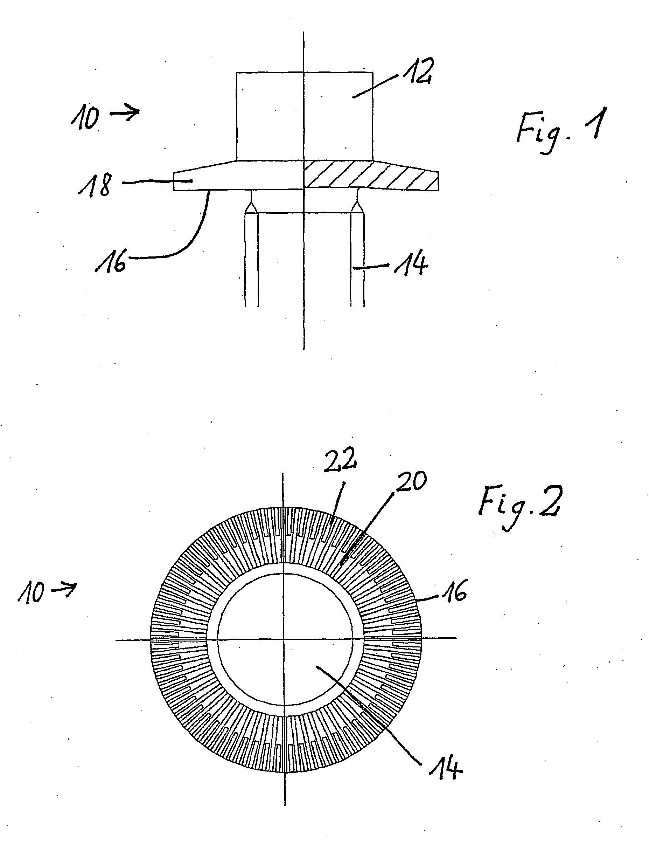

Figur 1 zeigt ein erfindungsgemäßes selbstsicherndes Befestigungselement 10 in Form einer Schraube von der Seite. Wie üblich umfasst dieses Befestigungselement einen Schraubenkopf 12, der einen der üblichen Kraftangriffe aufweist (hier nicht mehr dargestellt, da nicht erfindungsrelevant) und darunter ein Außengewinde 14, welches sich üblicherweise in ein Werkstück hinein erstreckt. Die dem Gewinde und damit dem Werkstück zugewandte Stirnfläche 16 ist erfindungsgemäß zu einem Flansch 18 erweitert, der sich am werkstückseitigen Ende des Kopfes 12 radial nach außen und leicht schräg auf das Werkstück zu erstreckt. Um diese Erstreckung noch deutlicher zu zeigen, ist der Flansch in der rechten Hälfte der Figur 1 geschnitten dargestellt, so dass die leichte Hinterschneidung von außen nach innen gut erkennbar wird.

Dieser leicht auf das Werkstück zu geneigte Flansch 18 wirkt dabei als zusätzliche Feder, durch die Setzungen in der Schraubverbindung ausgeglichen werden und damit die Selbstsicherung auch nach dem Setzen der Verbindung aufrechterhalten bleibt.

Figur 2 zeigt das Befestigungselement 10 der Figur 1 von der Werkstückseite, also von unten. Hier ist wieder der zentrale Außengewindeträger (Gewindeschaft) 14 erkennbar und es ist auch erkennbar, dass die Stirnfläche 16 mit dünnen, radial verlaufenden Rippen 20 versehen ist.

Im Außenbereich der Stirnfläche ist erfindungsgemäß zusätzlich zwischen jeweils zwei Rippen 20 jeweils eine weitere Rippe 22 angeordnet, um auf diese Weise die Selbstsicherungswirkung weiter zu verbessern. Die Rippen 22 können sich dabei etwa über die Hälfte der Länge der Rippen 20 erstrecken.

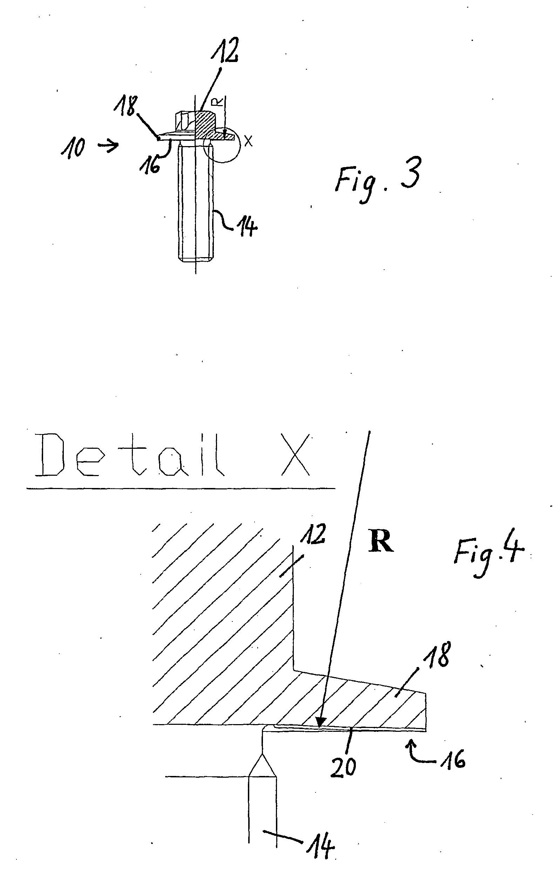

Figur 3 zeigt ein weiteres erfindungsgemäßes selbstsicherndes Befestigungselement in Form einer Schraube von der Seite, wobei diesmal der Kopf 12 mit einem Außensechsrundkraftangriff versehen ist, und der ganze Kopf geschnitten dargestellt ist. In Figur 3 bezeichnen die gleichen Bezugszeichen wie in Figur 1 die gleichen Teile.

Figur 4 zeigt das Detail X der Figur 3, um die Neigung des Flansches 18 und die Anbringung der Rippen 20 zu verdeutlichen. Die Neigung des Flansches 18 ist hier nicht linear, sondern in Form eines sehr großen Radius R ausgeführt. Gegenüber der in der Zeichnung dargestellten, vom Betrachter abkehrten Außenkante des Flansches 18 ist aber der schräge Verlauf des Flansches 18, der nach innen hin einem sehr großen Radius R folgt, ebenso wie die Rippen 20, sehr deutlich erkennbar.

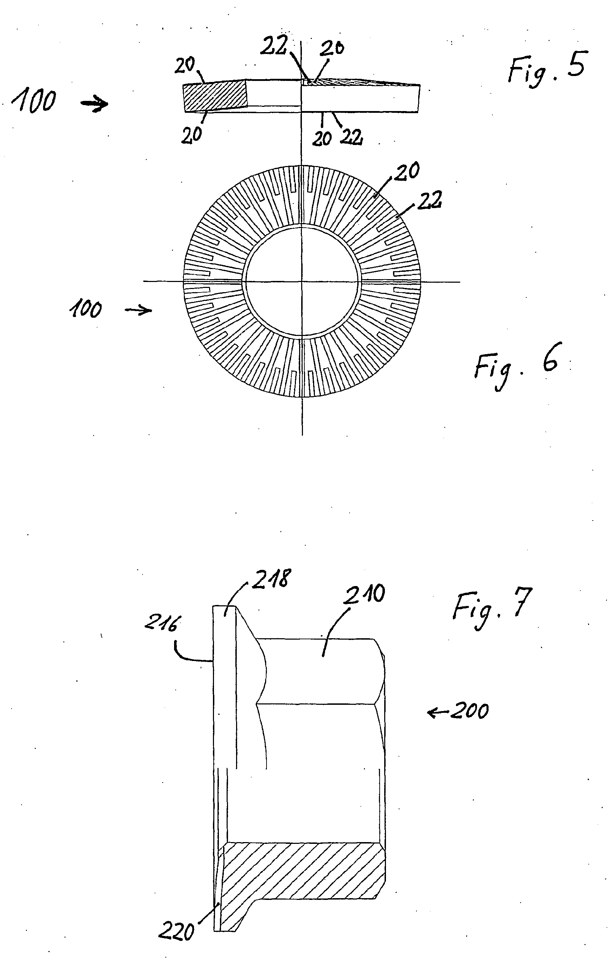

Figur 5 zeigt eine weitere Ausführungsform der vorliegenden Erfindung in Form einer Beilagscheibe 100, bei der die linke Hälfte geschnitten dargestellt ist. Auch hier ist die auf das Werkstück hin geneigte Wölbung der Beilagscheibe 100 deutlich zu erkennen. Bei dem dargestellten Ausführungsbeispiel sind beide Seiten der Beilagscheibe jeweils mit Rippen 20, 22 versehen, wobei sich die Rippen 20 über die gesamte Breite der Beilagscheibe 100 radial erstrecken. Jeweils zwischen zwei solchen Rippen 20 ist im Außenbereich jeweils eine weitere Rippe 22 angeordnet, die sich nur über knapp die Hälfte der Radialerstreckung der Beilagscheibe 100 erstreckt.

Das in den Figuren 5 und 6 dargestellte Ausführungsbeispiel ist auf beiden Seiten mit Rippen 20, 22 versehen. Selbstverständlich sind aber auch Anwendungsfälle denkbar, bei denen lediglich eine der beiden Seiten mit entsprechenden Rippen 20, 22 versehen sein sollte.

Figur 7 zeigt schließlich eine weitere Ausführungsform des erfindungsgemäßen selbstsichernden Befestigungselementes, diesmal als Mutter 200 mit Außensechskant-Kraftangriff. Der Mutternkörper 210 ist hierbei mit einem Außensechskant als Kraftangriff versehen, der an dem werkstückseitigen Ende der Mutter in einen Flansch 218 ausläuft. Dieser ist, wie in der Schnittdarstellung deutlich zu erkennen, wiederum auf das Werkstück hin geneigt beziehungsweise gewölbt ausgebildet und an seiner Unterseite mit Rippen 220 versehen. Diese dem Werkstück zugewandte Unterseite des Flansches 218 entspricht in ihrer Ausbildung dabei der Unterseite der Beilagscheibe 100, wie sie in Figur 6 dargestellt ist. Aus diesem Grunde ist von einer nochmaligen Darstellung der Unterseite der Mutter 200 abgesehen worden, da diese ebenfalls der Darstellung in Figur 6 entspricht.

## Patentansprüche

1. Selbstsicherndes Befestigungselement, beispielsweise in Form einer Schraube (10) oder Mutter (200), dessen mit einem Werkstück zusammenwirkende Stirnfläche (16) eine Anzahl radial verlaufender Rippen (20) aufweist, bei dem die Stirnfläche (16; 216) durch einen Flansch (18; 218) verbreitert ist, der sich sowohl radial nach außen als auch leicht schräg nach unten auf das Werkstück hin erstreckt, **dadurch gekennzeichnet, dass** im radial äußeren Bereich des Flansches (18; 218) zusätzliche Rippen (22) zwischen den über die ganze Stirnfläche (16; 216) verlaufenden Rippen (20) angeordnet sind.

2. Selbstsicherndes Befestigungselement nach Anspruch 1, **dadurch gekennzeichnet, dass** in jedem Zwischenraum zwischen den über die ganze Stirnfläche (16; 216) verlaufenden Rippen (20) jeweils eine zusätzliche Rippe (22) angeordnet ist.

3. Selbstsicherndes Befestigungselement nach Anspruch 1 oder 2, **dadurch gekennzeichnet, dass** die zusätzlichen Rippen (22) etwa halb so lang sind, wie die über die ganze Stirnfläche (16; 216) verlaufenden Rippen (20).

4. Beilagscheibe (100) für die Selbstsicherung von Befestigungselementen an einem Werkstück, bei der zumindest eine Stirnfläche der Beilagscheibe (100) mit radial verlaufenden Rippen (20) versehen ist, die schräg nach außen auf das Werkstück hin gewölbt ist, **dadurch gekennzeichnet, dass** im radial äußeren Bereich der Beilagscheibe (100) zusätzliche Rippen (22) zwischen den über die ganze Stirnfläche verlaufenden Rippen (20) angeordnet sind.

5. Beilagscheibe nach Anspruch 4, **dadurch gekennzeichnet, dass** in jedem Zwischenraum zwischen den über die ganze Stirnfläche verlaufenden Rippen (20) jeweils eine zusätzliche Rippe (22) angeordnet ist.

6. Beilagscheibe nach Anspruch 4 oder 5, **dadurch gekennzeichnet, dass** die zusätzlichen Rippen (22) etwa halb so lang sind, wie die über die ganze Stirnfläche verlaufenden Rippen (20).

## Claims

1. Self-locking fastener, for example of the kind of a screw (10) or nut (200), the front face (16) thereof cooperating with the workpiece is having a number of radially extending ribs (20), wherein the front face (16; 216) is enlarged by a flange (18; 218) which is extending both radially to the exterior thereof as well as slightly downwardly inclined in the direction towards the workpiece, **characterized in that** in the radially outer area of the flange (18; 218) additional ribs (22) are positioned in between the ribs (20) extending over the entire front face (16; 216).

2. Self-locking fastener according to claim 1, **characterized in that** within each gap between the ribs (20) extending over the entire front face (16; 216) each one additional rib (22) is provided.

3. Self-locking fastener according to claim 1 or 2, **characterized in that** the additional ribs (22) are having a length about a half of the length of the ribs (20) extending over the entire front face (16; 216).

4. Washer (100) for the self-locking of fasteners on a workpiece, in which at least one front face of the washer (100) is provided with radially extending ribs (20) which slantingly in the outward direction are domed towards the workpiece, **characterized in that** in the radially exterior area of the washer (100) additional ribs (22) are provided in between the ribs (20) extending over the entire front face.

5. Washer according to claim 4, **characterized in that** within each gap between the ribs (20) extending over the entire front face each one additional rib (22) is positioned.

6. Washer according to claim 4 or 5, **characterized in that** the additional ribs (22) are having a length about the half of the length of the ribs (20) extending over the entire front face.

## Revendications

1. Elément de fixation autobloquant, par exemple sous forme d'une vis (10) ou d'un écrou (200), dont la surface frontale (16) coopérant avec une pièce à usiner présente une pluralité de nervures (20) s'étendant radialement, dans lequel la surface frontale (16 ;216) est élargie par une bride (18 ;218), qui s'étend tant radialement vers l'extérieur que légèrement inclinée en dessous sur la pièce à usiner, **caractérisé en ce que** dans la région extérieure radiale de la bride (18 ;218) des nervures supplémentaires (22) sont disposées entre les nervures (20) s'étendant sur la totalité de la surface frontale (16 ;216).

2. Elément de fixation autobloquant selon la revendication 1, **caractérisé en ce que** dans chaque espace intermédiaire entre les nervures (20) s'étendant sur la totalité de la surface frontale (16 ;216), une nervure supplémentaire (22) est respectivement disposée.

3. Elément de fixation autobloquant selon la revendication 1 ou 2, **caractérisé en ce que** les nervures supplémentaires (22) sont environ de moitié aussi longues que les nervures (20) s'étendant sur la totalité de la surface frontale (16 ;216).

4. Rondelle (100) à des fins d'autoblocage d'éléments de fixation sur une pièce à usiner, dans laquelle au moins une surface frontale de la rondelle (100) est pourvue de nervures (20) s'étendant radialement, qui sont bombées en oblique vers l'extérieur sur la pièce à usiner, **caractérisée en ce que** dans la zone extérieure radiale de la rondelle (100) des nervures supplémentaires (22) sont disposées entre les nervures (20) s'étendant sur la totalité de la surface frontale.

5. Rondelle selon la revendication 4, **caractérisée en ce que** dans chaque espace intermédiaire entre les nervures (20) s'étendant sur la totalité de la surface frontale, une nervure supplémentaire (22) est respectivement disposée.

6. Rondelle selon la revendication 4 ou 5, **caractérisée en ce que** les nervures supplémentaires (22) sont environ de moitié aussi longues que les nervures (20) s'étendant sur la totalité de la surface frontale.
